# EUROPEAN PATENT SPECIFICATION

(11) **EP 4 354 096 B1**
(45) Date of publication and mention of the grant of the patent: **16.04.2025**
(21) Application number: 22830349.1
(22) Date of filing: 30.08.2022
(51) Int. Cl.: G01F 23/263

(54) **MEASUREMENT APPARATUS, MEASUREMENT SYSTEM, AND METHOD**
MESSVORRICHTUNG, MESSSYSTEM UND VERFAHREN
APPAREIL DE MESURE, SYSTÈME DE MESURE ET PROCÉDÉ

(43) Date of publication of application: 17.04.2024
(73) Proprietor: Japan Infrastructure Measurement Inc., Tokyo 170-0013 (JP)
(72) Inventor: HIGUCHI Tetsuya, Tokyo 1700013 (JP); KOYAMA Yuki, Tokyo 1700013 (JP); KASAI Yuji, Tokyo 1700013 (JP)
(74) Representative: Herrero & Asociados, S.L.
(86) International application number: PCT/JP2022/032602
(87) International publication number: WO 2024/047754

(56) References cited:
- WO-A1-2010/077893
- JP-A- H1 151 745
- JP-A- S5 685 395
- US-A- 4 947 689
- US-A1- 2009 301 190
- US-A1- 2014 290 343
- US-B1- 6 178 818

## Description

### [TECHNICAL FIELD]

The present disclosure relates to a measuring device, a measuring system and method.

### BACKGROUND ART

Generally, in order to measure a water level, a pressure type, a resistance type and a capacitance type are known. For example, Patent Literature 1 below discloses an apparatus for measuring the water level in a washing machine.

### PRIOR ART LIST

### Patent Literature

Patent Literature 1: Japanese Unexamined Patent Publication No. Sho 56-85395

US 6 178 818 B1 discloses a filling level sensor comprising a ribbon cable. This document does not describe a third conductive wire group surrounded by a fourth conductive wire group.

### SUMMARY OF THE INVENTION

### Technical Problem

The technology disclosed in Patent Literature 1 is easily affected by the temperature change of the cable, and does not sufficiently ensure the estimation accuracy of the water level.

Therefore, the present disclosure has been made in view of the above-mentioned problems, and an object of the present disclosure is to provide a measuring device, a measuring system and method that can improve the measurement accuracy of the water level.

### TECHNICAL SOLUTION

According to one aspect of the present disclosure, there is provided a measuring device comprising: an oscillation circuit; a cable comprising a plurality of conductive wires connected to the oscillation circuit, and a covering part formed of an insulator and covering the plurality of conductive wires; and a control device that outputs measurement information of an electrostatic capacitance between the conductive wires based on the frequency information of the oscillation circuit, wherein the plurality of conductive wires has at least a first mode comprised of a first conductive wire group and a second conductive wire group, and a second mode comprised of a third conductive wire group and a fourth conductive wire group, unlike the first mode, wherein the first conductive wire group and the second conductive wire group are provided so as not to form a surrounding relation with each other, wherein a phase of a signal in the first conductive wire group and a phase of a signal in the second conductive wire group are different, wherein the third conductive wire group is provided so as to be surrounded by the fourth conductive wire group, wherein a phase of a signal in the third conductive wire group and a phase of a signal in the fourth conductive wire group are different, and wherein the control device is provided so as to be switchable between the first mode and the second mode.

According to another aspect of the present disclosure, there is provided a measuring system comprising a measuring device and an information processing device, wherein the measuring device comprises an oscillation circuit; a cable comprising a plurality of conductive wires connected to the oscillation circuit, and a covering part formed of an insulator and covering the plurality of conductive wires; and a control device that outputs measurement information of an electrostatic capacitance between the conductive wires based on the frequency information of the oscillation circuit, wherein the plurality of conductive wires have at least a first mode comprised of a first conductive wire group and a second conductive wire group, and a second mode that is comprised of a third conductive wire group and a fourth conductive wire group, unlike the first mode, wherein the first conductive wire group and the second conductive wire group are provided so as not to form a surrounding relation with each other, wherein a phase of a signal in the first conductive wire group and a phase of a signal in the second conductive wire group are different, wherein the third conductive wire group is provided so as to be surrounded by the fourth conductive wire group, wherein a phase of a signal in the third conductive wire group and a phase of a signal in the fourth conductive wire group are different, wherein the control device is provided so as to be switchable between the first mode and the second mode, and wherein the information processing device outputs information concerning a water level, based on the measurement information in the first mode and the measurement information in the second mode.

According to yet another aspect of the present disclosure, there is provided a method of processing measurement information, which is obtained with a measuring device, by an information processing device, wherein the measuring device comprises an oscillation circuit; a cable comprising a plurality of conductive wires connected to the oscillation circuit, and a covering part formed of an insulator and covering the plurality of conductive wires; and a control device that outputs measurement information of an electrostatic capacitance between the conductive wires based on the frequency information of the oscillation circuit, wherein the plurality of conductive wires have a first mode that is comprised of at least a first conductive wire group and a second conductive wire group, and a second mode that is comprised of a third conductive wire group and a fourth conductive wire group, unlike the first mode, wherein the first conductive wire group and the second conductive wire group are provided so as not to form a surrounding relation with each other, wherein a phase of a signal in the first conductive wire group and a phase of a signal in the second conductive wire group are different, wherein the third conductive wire group is provided so as to be surrounded by the fourth conductive wire group, wherein a phase of a signal in the third conductive wire group and a phase of a signal in the fourth conductive wire group are different, wherein the control device is provided so as to be switchable between the first mode and the second mode, and wherein the information processing device outputs information concerning a water level, based on the measurement information in the first mode and the measurement information in the second mode.

### [ADVANTAGEOUS EFFECTS]

According to the present disclosure, it is possible to improve the measurement accuracy of a water level.

### [BRIEF DESCRIPTION OF THE DRAWING]

FIG. 1 shows an outline of a measuring system 1000 according to an embodiment of the present disclosure;
FIG. 2 shows an example of a cross-sectional structure of a cable 2 according to the present embodiment;
FIG. 3 is a diagram which shows a configuration example of a measuring device 1 according to the present embodiment.
FIG. 4 is a diagram which shows a hardware configuration example of a control device 100 according to the present embodiment.
FIG. 5 is a diagram which shows an example of a circuit group 13 according to the present embodiment;
FIG. 6 shows an example of a first mode of a conductive wire group of the cable 2 according to the present embodiment;
FIG. 7 shows an example of a second mode of a conductive wire group of the cable 2 according to the present embodiment;
FIG. 8 is a flowchart which shows an example of the flow of processing of a measurement method using the measuring system 1000 according to the present embodiment; and
FIG. 9 shows an example of the first mode of the conductive wire group of the cable 2 according to a modification of the present embodiment.

### [DETAILED DESCRIPTION OF THE EMBODIMENTS]

Preferred embodiments of the present disclosure will be described in detail below with reference to the accompanying drawings. Further, in the present specification and the drawings, components having substantially the same functional configuration are designated by the same reference numerals, so that duplicate description will be omitted.

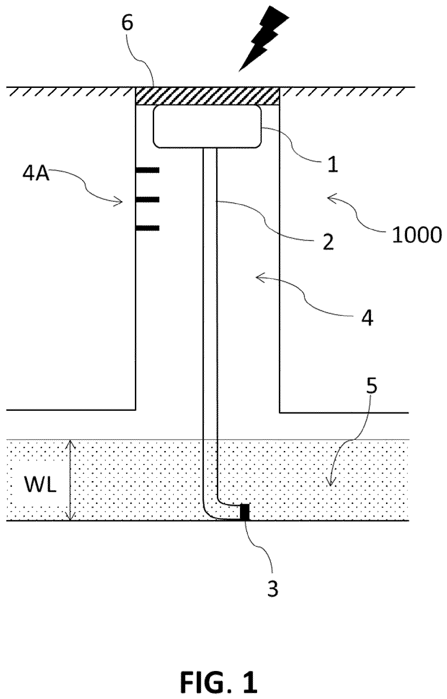

FIG. 1 shows an outline of a measuring system 1000 according to an embodiment of the present disclosure. As illustrated, a measuring system 1000 according to the present embodiment includes a measuring device 1. Such a measuring system 1000 is provided, for example, inside a manhole 4 and is used to measure the water level WL in sewage. In addition, the application of the measuring system 1000 is not limited to the measurement of the water level of sewage and can be used to measure the level of liquids such as water in various pipes, vessels, rivers, lakes, ponds, oceans, and the like.

The measuring device 1 is provided inside the manhole 4. In the present embodiment, the measuring device 1 is provided for example on the cover 6 of the manhole 4, but the installation position is not particularly limited. For example, the measuring device 1 may be provided at step 4A of the manhole 4, or may be provided outside the manhole 4.

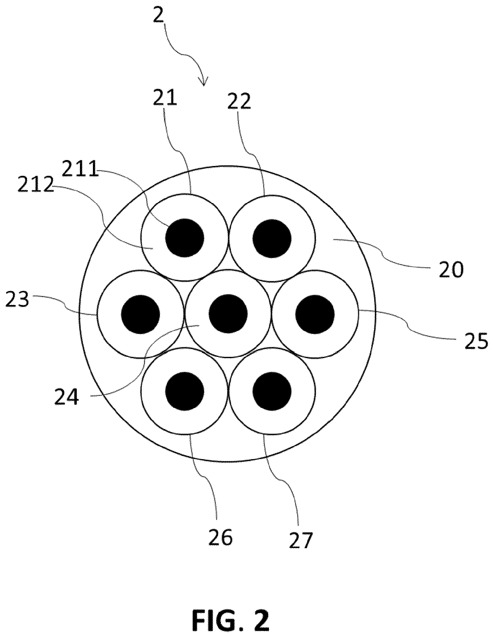

A cable 2 is suspended from the measuring device 1. FIG. 2 is a diagram which shows an example of a cross-sectional structure of the cable 2. The cable 2 is, for example, cabtyre cable. The cable 2 has a plurality of conductive wires 21, 22, 23, 24, 25, 26 and 27. The number of conductive wires is not particularly limited as long as the number thereof is plural. The conductive wires 21, 22, 23, 24, 25, 26 and 27 are covered with a covering part (sheath) 20 formed of an insulator. The conductive wire 21 is comprised of a conductor 211 and an insulator 212 covering the conductor 211. The conductive wires 22~27 have similar conductors and insulators. The specifications of the sheath 20, the conductor 211, and the insulator 212 may be known specifications. The cable 2 is not particularly limited, as long as it functions as the above-mention covering part, conductor, and insulator, besides the cabtyre cable.

As shown in FIG. 1, the cable 2 is extended and suspended from various circuits of the measuring device 1. An end part 3 of the cable 2 opposite to the measuring device 1 is capped with an insulator or the like, and is subjected to waterproof processing. A part of the cable 2 is immersed in water 5. The cable 2 is connected to the oscillation circuit. When a part of the cable 2 is immersed in water 5, the state of the electric force line leaking from the cable 2 changes. Then, the electrostatic capacitance between respective conductive wires 21~27 included in the cable 2 changes. The amount of change in this electrostatic capacitance has a correlation with the water level. Further, the change in electrostatic capacitance corresponds to the change in frequency of the oscillation circuit. That is, the electrostatic capacitance can be obtained from the frequency of the oscillating circuit, from which the water level can be estimated.

The cable 2 may be appropriately supported in a manhole 4 by the wall of the manhole 4. The length of the cable 2 is not particularly limited, and can be appropriately set in accordance with the depth of the measuring object (e.g., the depth of sewage) in the measurement area.

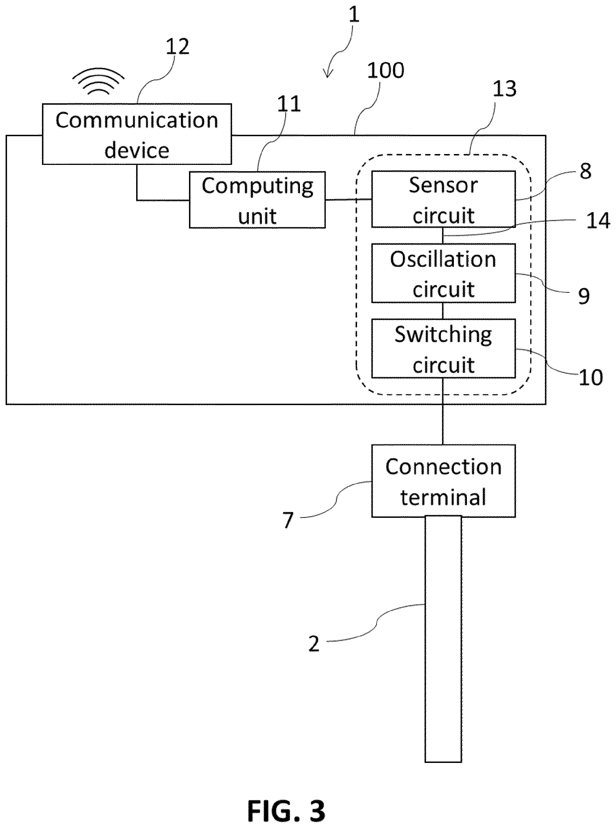

FIG. 3 shows a configuration example of the measuring device 1 according to the present embodiment. As illustrated, the measuring device 1 includes a control device 100, a cable 2 and a connection terminal 7.

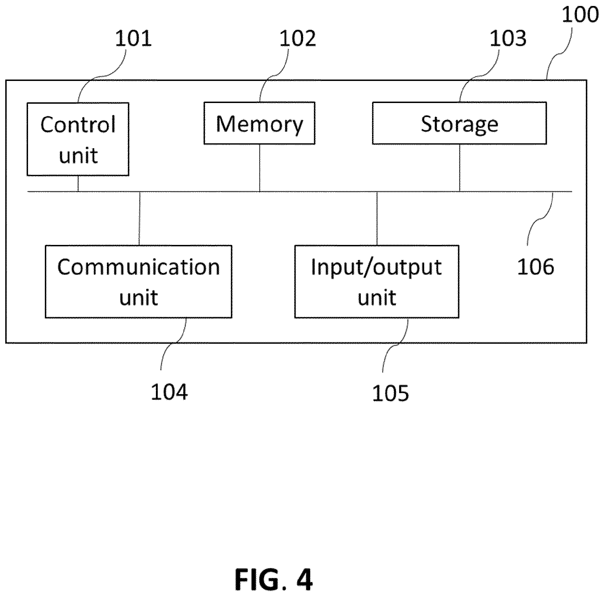

FIG. 4 shows a hardware configuration example of the control device 100 according to the present embodiment. The control device 100 includes at least a control unit 101, a memory 102, a storage 103, a communication unit 104, an input/output unit 105, and the like. These are electrically connected to each other through a bus 106. The control device 100 may have a power source (battery or the like) not illustrated.

The control unit 101 is a computing device that controls the overall operation of the control device 100, controls transmission/reception of data between elements, and performs information processing necessary for execution of applications and authentication processing. For example, the control unit 101 is a processor such as a CPU (Central Processing Unit), ASIC (Application Specific Integrated Circuit), FPGA (Field Programmable Gate Array), and the like, and executes a program or the like stored in the storage 103 and deployed in the memory 102 to execute each information processing.

The memory 102 is used as a work area or the like for the control unit 101, and stores a BIOS (Basic Input/Output System), various setting information, and the like, that are executed when the control device 100 is started.

The storage 103 stores various programs such as application programs. A database storing data used for each processing may be constructed in the storage 103.

The communication unit 104 connects the control device 100 to a network. The communication unit 104 communicates with an external device directly or via a network access point by a method such as, for example, a wired LAN (Local Area Network), a wireless LAN, Wi-Fi (Wireless Fidelity, registered trademark), an infrared communication, a Bluetooth (registered trademark), LPWA (Low Power Wide Area), a short-range or non-contact communication, or the like. Further, the communication device 12 is realized by the communication unit 104.

The input/output unit 105 is, for example, an information input device such as a keyboard, a mouse, a touch panel, or the like, and an output device such as a display, or the like. In addition, the input/output unit 105 has a signal input/output function. The input/output unit 105 realizes, for example, a function as a connection terminal 7 that connects the circuit group 13 and the cable 2 shown in FIG. 3.

The bus 106 is commonly connected to each of the above elements and transmits, for example, an address signal, a data signal, and various control signals.

Returning to FIG. 3, the control device 100 includes a sensor circuit 8, an oscillation circuit 9, a switching circuit 10, a computing unit 11, and a communication device 12. Further, the switching circuit 10 (or the oscillation circuit 9 if the switching circuit 10 is not provided) is connected to a connection terminal 7. The connection terminal 7 is a terminal that connects this circuit and each conductive wire of the cable 2. A group of the sensor circuit 8, the oscillation circuit 9, and the switching circuit 10 is defined herein as a circuit group 13.

The sensor circuit 8 has a function of supplying electric power to the oscillation circuit 9 described later and acquiring a signal from the oscillation circuit 9. The sensor circuit 8 can be realized by, for example, the control unit 101, the memory 102, the storage 103, or the like as described above. The signal acquired by the sensor circuit 8 is output to the computing unit 11.

The oscillation circuit 9 is connected to the sensor circuit 8. The frequency of the oscillation circuit 9 changes based on the changes in electrostatic capacitance between the conductive wires of the cable 2. Therefore, by outputting the signal of this frequency to the sensor circuit 8, the electrostatic capacitance can be calculated by the computing unit 11, which will be described later. Although the configuration of the oscillation circuit 9 is not particularly limited, it is preferable to use a Clapp oscillation circuit that can maintain a stable oscillation state even if the Q value of the LC resonance circuit is lowered.

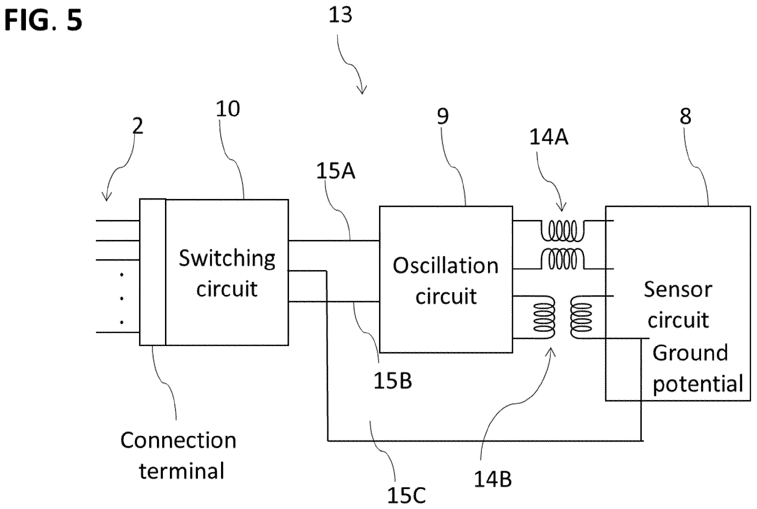

The electrical connection mode of the connection unit 14 between the sensor circuit 8 and the oscillation circuit 9 is not particularly limited. However, since the periphery of the cable 2 is at a ground potential and the common mode voltage of cable 2 is also at a ground potential, the oscillation circuit 9 preferably avoids the influence of the common mode voltage of cable 2. Therefore, the oscillation circuit 9 is preferably in a state of being capacitively insulated (that is, in a floating state) from the surroundings. FIG. 5 is a diagram which shows an example of the circuit group 13 according to the present embodiment. Referring to FIG. 5, for example, the connection unit 14 is preferably comprised of a common mode choke coil 14A for supplying electric power to the oscillation circuit 9 and a high frequency transformer 14B for acquiring the signal output from the oscillation circuit 9.

The switching circuit 10 has the function of switching the conductive wires 21~27 of the cable 2 to a plurality of conductive wire groups. For example, the switching circuit 10 can switch seven conductive wires to one of three conductive wire groups. Referring to FIG. 5, specifically, three conductive wire groups are composed of the first conductive wire group connected to the oscillation circuit 9 via a connecting wire 15A and having a signal of a first phase, the second conductive wire group connected to the oscillation circuit 9 via a connecting line 15B and having a signal of a phase different from the first phase (e.g., reversed from positive to negative by the differential output), and the fifth conductive wire group not connected to the oscillation circuit 9 but connected to the ground potential of the sensor circuit 8 (i.e. circuit excluding the oscillation circuit 9) via a connecting wire 15C (the third conductive wire group and the fourth conductive wire group are described below). A conductive wire in the fifth conductive wire group has the function of a so-called neutral wire. By providing the fifth conductive wire group composed of such neutral wires, the influence of the common mode voltage of the cable 2 can be reduced. The specific configuration of these conductive wire groups will be described later. This state comprising three conductive wire groups is referred to herein as the "first mode".

Further, in the present embodiment, seven conductive wires can be switched further to any one of two conductive wire groups different from the first mode by the switching circuit 10. Specifically, the two conductive wire groups are composed of the third conductive wire group connected to the oscillation circuit 9 via a connecting line 15A and having a signal of the first phase, and the fourth conductive wire groups connected to the oscillation circuit 9 via a connecting line 15B and having a signal of a phase different from the first phase (e.g., reversed from positive to negative). The state comprising these two groups of conductors is referred to herein as the "second mode".

The switching circuit 10 according to the present embodiment can be realized by, for example, a PIN diode. The switch by the switching circuit 10 can be performed at predetermined intervals. The predetermined interval may be the same or different between the first mode and the second mode. The predetermined interval may be from several seconds to several tens of seconds.

The computing unit 11 has a function of outputting measurement information of a capacitance of the cable 2 based on the frequency of the signal acquired by the sensor circuit 8. Calculation of such capacitance can be realized by a known method. Further, the computing unit 11 may output information concerning the water level in the space where the cable 2 is provided, such as the manhole 4 where the cable 2 is provided, based on the obtained measurement information of the capacitance. For example, the computing unit 11 can estimate the water level of the manhole 4 from the relationship between the value of the capacitance, which is the obtained measurement information, and the capacitance and water level obtained in advance. An embodiment of a specific estimation method will be described later. Further, the function of the computing unit 11 may be provided in the measuring device 1 or may be realized by an external information processing device different from the measuring device 1.

The communication device 12 has a function of outputting the measurement information (e.g., information concerning a value of a capacitance and a water level estimated based on such a capacitance) outputted by the computing unit 11 to an external device by wire or wirelessly. The communication device 12 may output the measurement information to devices, for example, such as an external server, a computer, a smartphone, a tablet, and a public display. An external device that has acquired the measurement information can, for example, display the measurement information, or process the measurement information to output other information.

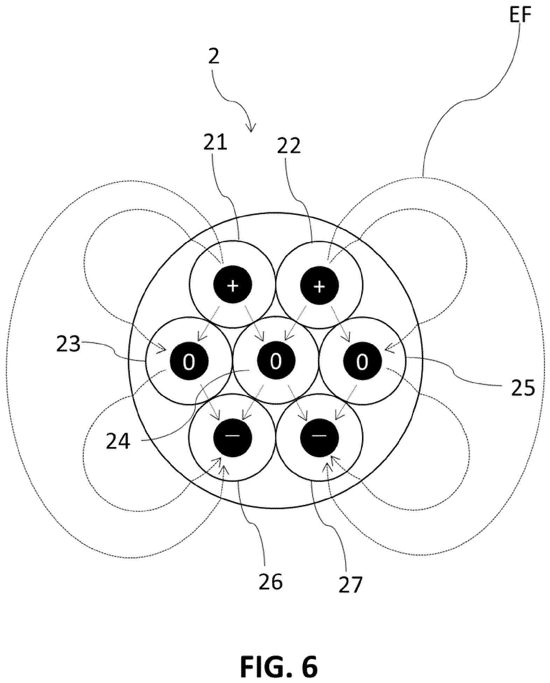

Here, a conductive wire group switched by the switching circuit 10 will be described. FIG. 6 is a diagram which shows an example of a first mode of a conductive wire group of the cable 2 according to the present embodiment. The cable 2 shown in the figure has the same configuration as the cable 2 shown in FIG. 2. In the example shown in FIG. 6, the conductive wires 21 and 22 are a first group of conductive wires and are indicated by a "+". The conductive wires 26 and 27 are a second group of conductive wires and are indicated by a "-". The first conductive wire group and the second conductive wire group are provided such that the conductive wires in the same group are adjacent to each other and do not form a surrounding relation with each other. These two conductive wire groups are inverted in phase by the differential output from the oscillation circuit 9. This makes it difficult to be affected by extraneous noise and noise due to parasitic capacitance. Further, the first conductive wire group and the second conductive wire group are not necessarily adjacent to each other, and may be configured such that the electric force lines generated between the conductive wires constituting the first conductive wire group and the conductive wires constituting the second conductive wire group leak to the outside of cable 2. Similarly to a case where a fifth conductive wire group is provided, the arrangement of each conductor is not particularly limited as long as electric force lines generated between the conductive wires constituting the first conductor group and the conductive wires constituting the fifth conductive wirer group, and/or electric force lines generated between the conductive wires constituting the second conductive wire group and the conductive wires constituting the fifth conductive wire group are configured so as to leak to the outside of the cable 2.

The conductive wires 23, 24 and 25 are the fifth group of conductive wires and are the neutral wires indicated by "0". In this manner, for example, the first group of conductive wires and the second group of conductive wires are provided facing each other with the fifth group of conductive wires interposed therebetween. Then, as shown in FIG. 6, the electric force line EF are transferred from the first group of conductive wires to the second group of conductive wires, from the first group of conductive wires to the fifth group of conductive wires, and from the fifth group of conductive wires to the second group of conductive wires. At this time, an electric force line EF is generated outside the cable 2, so that these electrostatic capacitances change under the influence of water outside the cable 2. Since this capacitance changes depending on the amount of water immersed (i.e., the water level), the water level can be determined from the change in capacitance.

At this time, the neutral wire, which is the fifth group of conducting wires, is connected so as to ground the sensor circuit 8 instead of the oscillation circuit 9. It can suppress the influence on the electrostatic capacitance by the parasitic capacitance generated between the conductive wires of the cable 2 and the oscillation circuit 9 and the sensor circuit 8. Thereby, the influence of common mode noise on the capacitance of the cable 2 can be suppressed, and the measurement accuracy can be further improved.

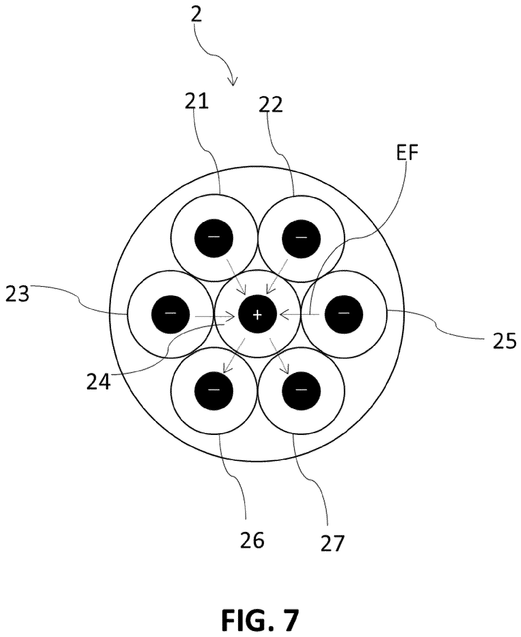

Next, FIG. 7 is a diagram which shows an example of a second mode of a conductive wire group of the cable 2 according to the present embodiment. In the example shown in FIG. 7, conductive wire 24 is the third conductive wire group, and conductive wires 21, 22, 23, 25, 26 and 27 are a fourth conductive wire group exhibiting a signal of a phase different with the third conductive wire group. As shown in FIG. 7, the third conductive wire group is provided by surrounding a fourth conductive wire group.

In the second mode, the electric force lines EF are generated only between the conductive wires 24 at a center of the cable 2 and the conductive wires around it. Therefore, since the electric force lines EF do not leak to the outside of the cable 2, they are not affected by surrounding water. Here, the capacitance generated between the conductive wires of the cable 2 is caused by the cable 2, and particularly depends on the temperature of the cable 2. For example, if the sheath or the like comprising the cable 2 is made of vinyl chloride or the like, the influence of temperature on the dielectric constant is large, so that the value of the electrostatic capacitance can fluctuate greatly depending on the water temperature.

The change in the dielectric constant of the cable 2 caused by the water temperature or the like can be grasped from the frequency of the oscillation circuit 9 (i.e., capacitance in the cable 2) in the second mode. That is, the frequency of the oscillation circuit 9 obtained in the first mode includes not only the water level but also the temperature of the cable 2 and the like. Therefore, by switching to the second mode and obtaining a frequency (capacitance) value affected only by temperature, the temperature compensation becomes possible. Thereby, the estimation accuracy of the water level can be further improved.

Further, the oscillation frequency may also change according to the temperature changes in the oscillation circuit 9. In the present embodiment, in each of the first mode and the second mode, the frequency change due to the influence of the temperature change of the oscillation circuit 9 is added, but temperature compensation is performed using frequency information in the second mode, thereby reducing the influence of the temperature of the oscillation circuit 9. Further, in order to perform temperature compensation with higher accuracy, it is preferable to measure the temperature of the circuit board on which the oscillation circuit 9 is mounted. The temperature information enables more accurate temperature compensation.

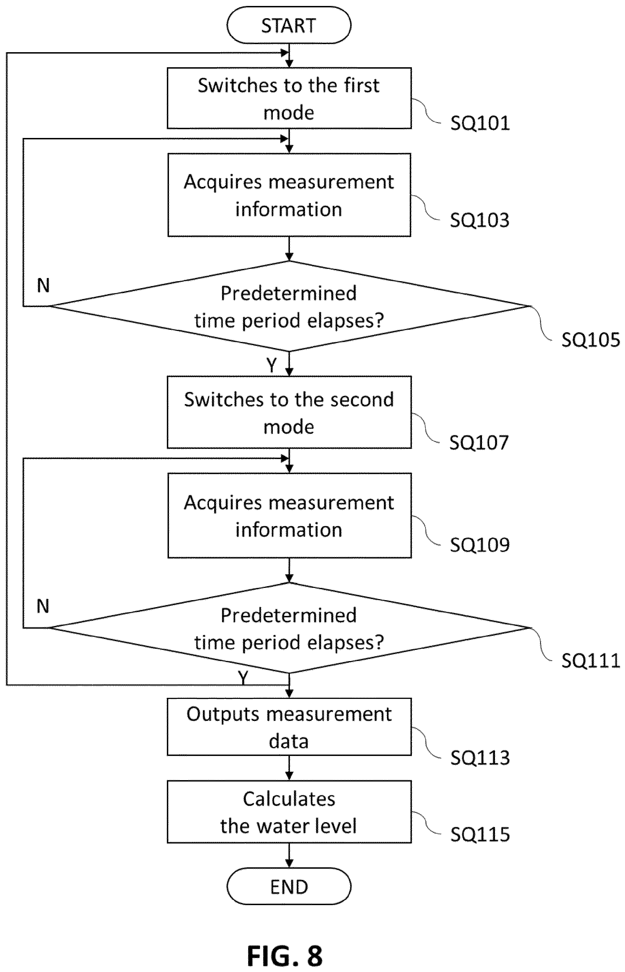

Next, an example of the processing flow of the measurement method using the measuring system 1000 according to the present embodiment will be described. FIG. 8 is a flowchart which shows an example of the flow of processing of a measurement method using the measuring system 1000 according to the present embodiment. First, the control device 100 switches to the first mode by the switching circuit 10 (step SQ101). Next, the control device 100 acquires measurement information such as the frequency of the oscillation circuit 9 or the like by the sensor circuit 8 (step SQ103). The measurement information acquired here is the electrostatic capacitance C1 between the first conductive wire group and the second conductive wire group of the cable 2, which received the influence of the water level WL, and the influence of the water temperature. The acquisition of such measurement information can be performed continuously for a predetermined time period. The acquisition interval is not particularly limited. Moreover, the measurement information acquired for a predetermined time period can be appropriately processed by a predetermined statistical method such as averaging.

After a predetermined time period elapses from the start of acquisition of the measurement information (step SQ105), the control device 100 switches from the first mode to the second mode by the switching circuit 10 (step SQ107). Next, the control device 100 acquires measurement information such as the frequency and capacitance of the oscillation circuit 9 by the sensor circuit 8 (step SQ109). The measurement information obtained here is the electrostatic capacitance C2 between the third conductive wire group and the fourth conductive wire group of the cable 2 that has received the influence of the water temperature. Acquisition of such measurement information can be performed continuously for a predetermined time period. The acquisition interval is not particularly limited. Moreover, the measurement information acquired for a predetermined time period may be appropriately processed by a predetermined statistical method such as averaging. After a predetermined time period elapses from the start of acquisition of the measurement information in the second mode (step SQ111), the control device 100 again switches from the second mode to the first mode by the switching circuit 10 (step SQ101).

The control device 100 outputs the measurement information acquired by the sensor circuit 8 (step SQ113), and the computing unit 11 calculates the water level based on the measurement information (step SQ115). An example of water level calculation will be described.

First, the capacitance in the first mode (referred to as C01) and the capacitance in the second mode (referred to as C02) are measured in advance in a state where the cable 2 is not immersed in water. Between the capacitance C01 and the capacitance C02 in a state where the cable 2 is not immersed in water, there is a proportional relationship of constant multiplication. The proportional constant k is determined by the arrangement of the conductive wires of the cable 2 and the allocation of conductive wire groups in each mode. By investigating this relationship in advance, the reference capacitance CB in the first mode can be obtained from the capacitance C2 in the second mode. The capacitance C2 changes with the temperature of the cable 2, but it is important to obtain the reference capacitance in the first mode in response thereto.

Next, when measuring the capacitance C1 in the first mode and the capacitance C2 in the second mode in a state where the cable 2 is immersed in water, the water level is proportional to the difference between the capacitance C1 and the reference capacitance CB. Therefore, the water level FL is proportional to C1-kC2. Therefore, by calculating the capacitance C1 and the capacitance C2 in each mode, the water level can be estimated considering the temperature compensation.

Information concerning the calculated water level may be appropriately transmitted to an external device or may be appropriately stored in the storage of the measuring device 1 or the like.

### <Modification>

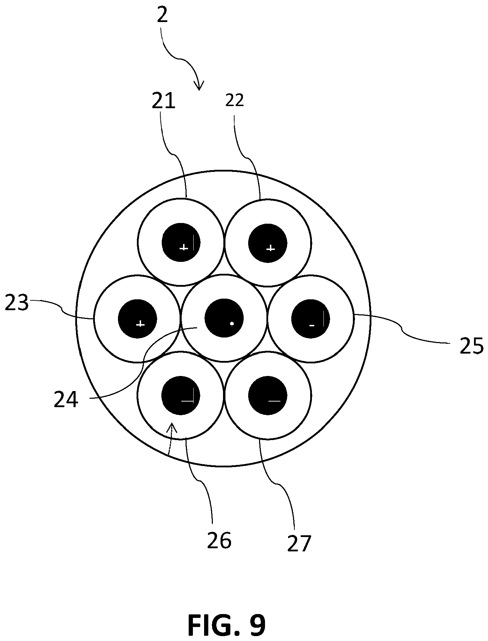

Next, a modification according to the present embodiment will be described. FIG. 9 is a diagram which shows an example of a first mode of a conductive wire group of the cable 2 according to a modification of the present embodiment. In the illustrated example, the fifth conductive wire group corresponding to the neutral wires is not provided, and consists only of the first conductive wire group (conductive wires 21, 22 and 23) and the second conductive wire group (conductive wires 25, 26 and 27). Further, the conductive wire 24 is not connected to any circuit.

In the case where such a neutral wire is not provided, it is slightly affected by the parasitic capacitance, but the water level can be estimated considering the temperature compensation by switching the above-mentioned modes.

The measuring system and the measuring device according to the present embodiment have been described above. According to such a measuring system or the like, by differentiating (e.g., differential output) the phase of a signal between a first conductive wire group and a second conductive wire group included in the cable, the influence of external noise on the cable 2 can be suppressed. Thereby, the estimation accuracy of the water level based on the electrostatic capacity can be improved. Further, by providing a neutral wire as the fifth conductive wire group and applying a ground potential independent from the oscillation circuit 9, the oscillation circuit 9 can be put into a flow state, and further, the estimation accuracy of the water level can be improved. Moreover, by switching to a mode of other configurations (third conductive wire group, fourth conductive wire group) in which the electric force line come out to the outside of the cable 2 by the switching circuit 10, the effect of the temperature of the cable 2 on the capacitance can be considered. By enabling switching between such a water level measurement mode (first mode) and temperature compensation mode (second mode), the water level can be measured more reliably even in an environment with large temperature changes. Such a measurement system is provided, for example, in a manhole or the like, and can realize the rise in the water level of a manhole at the time of water increase in real time and with a simple configuration.

Although the preferred embodiments of the present disclosure have been described in detail with reference to the accompanying drawings, the technical scope of the present disclosure is not limited to such examples. It would be apparent to those skilled in the art that various changes or modifications can be made within the scope of the technical ideas described in the claims. These are, of course, understood as falling under the technical scope of the present disclosure.

The device described herein can be realized as a single device or can be realized by a plurality of devices (for example, a cloud server) which are partially or wholly connected by a network. For example, the control unit 101 and the storage 103 of the control device 100 can be realized by different servers connected to each other by a network. The whole or part of the functions of the control device 100 can be exhibited in an IC (Integrated Circuit) such as a microcomputer (not shown), or other terminals. Further, the information obtained from various measuring instruments and sensors provided in the measuring device 1 and the like may be obtained by a control device provided outside the housing of the measuring device 1. That is, the measuring system 1000 may have a configuration in which the control device 100 and the cable 2 are separated.

The series of processes by the device described herein can be realized by using any of software, hardware, and a combination of software and hardware. It is possible to create a computer program for realizing each function of the control device 100 according to the present embodiment and mount it on a PC or the like. It is also possible to provide a computer-readable recording medium in which such a computer program is stored. The recording medium is, for example, a magnetic disk, an optical disk, a magneto-optical disk, a flash memory, or the like. Further, the above computer program may be distributed, for example, via a network without using a recording medium.

Further, the processes described herein using the flowchart diagram do not necessarily have to be executed in the order shown in the drawings. Some processing steps can be performed in parallel. Further, additional processing steps may be adopted, and some processing steps may be omitted.

Further, the effects described herein are merely explanatory or exemplary and are not limited. That is, the techniques according to the present disclosure may have other effects apparent to those skilled in the art from the description herein, in addition to or in place of the above effects.

### [Description of Reference Numerals]

1: measuring device
2: cable
8: sensor circuit
9: oscillation circuit
10: switching circuit
11: computing unit
12: communication device
20: covering part (sheath)
21 ~ 27: conductive wires
211: conductor
212: insulator
1000: measuring system

## Claims

1. A measuring device comprising:
an oscillation circuit;
a cable comprising a plurality of conductive wires connected to the oscillation circuit, and a covering part formed of an insulator and covering the plurality of conductive wires; and
a control device that outputs measurement information of an electrostatic capacitance between the conductive wires based on the frequency information of the oscillation circuit,
wherein the plurality of conductive wires has at least a first mode comprised of a first conductive wire group and a second conductive wire group, and a second mode, different from the first mode, comprised of a third conductive wire group and a fourth conductive wire group,
wherein the first conductive wire group and the second conductive wire group are provided so as not to form a surrounding relation with each other,
wherein a phase of a signal in the first conductive wire group and a phase of a signal in the second conductive wire group are different,
wherein the third conductive wire group is provided so as to be surrounded by the fourth conductive wire group,
wherein a phase of a signal in the third conductive wire group and a phase of a signal in the fourth conductive wire group are different, and
wherein the control device is provided so as to be switchable between the first mode and the second mode.

2. The measuring device according to Claim 1,
wherein the plurality of conductive wires further comprises a fifth conductive wire group, and
wherein the fifth conductive wire group is a group comprised of neutral wires connected to the ground potential of the control device having circuits other than the oscillation circuit.

3. The measuring device according to Claim 2,
wherein the first conductive wire group and the second conductive wire group are provided facing each other with the fifth conductive group interposed therebetween.

4. The measuring device according to any one of Claims 1 to 3,
wherein the control device outputs measurement information of an electrostatic capacitance between the conductive wires based on the frequency information of the oscillation circuit in the second mode.

5. The measuring device according to any one of Claims 1 to 4,
wherein the control device comprises a switching circuit, and
wherein the first mode and the second mode are switched by the switching circuit.

6. The measuring device according to any one of Claims 1 to 5,
wherein the cable is a Cabtyre cable.

7. The measuring device according to any one of Claims 1 to 6,
wherein the control device comprises a communication device, and
wherein the communication device transmits measurement information to an external device.

8. A measuring system comprising:
a measuring device according to claim 1; and
an information processing device,
wherein the information processing device outputs information concerning the water level, based on the measurement information in the first mode and the measurement information in the second mode.

9. A method of processing measurement information, which is obtained with a measuring device, by an information processing device,
wherein the measuring device comprises:
an oscillation circuit;
a cable comprising a plurality of conductive wires connected to the oscillation circuit, and a covering part formed of an insulator and covering the plurality of conductive wires; and
a control device that outputs measurement information of an electrostatic capacitance between the conductive wires based on the frequency information of the oscillation circuit,
wherein the plurality of conductive wires has at least a first mode comprised of a first conductive wire group and a second conductive wire group, and a second mode, different from the first mode, comprised of a third conductive wire group and a fourth conductive wire group,
wherein the first conductive wire group and the second conductive wire group are provided so as not to form a surrounding relation with each other,
wherein a phase of a signal in the first conductive wire group and a phase of a signal in the second conductive wire group are different,
wherein the third conductive wire group is provided so as to be surrounded by the fourth conductive wire group,
wherein a phase of a signal in the third conductive wire group and a phase of a signal in the fourth conductive wire group are different,
wherein the control device is provided so as to be switchable between the first mode and the second mode, and
wherein the information processing device outputs information concerning the water level, based on the measurement information in the first mode and the measurement information in the second mode.

## Patentansprüche

1. Messvorrichtung, aufweisend:
einen Schwingkreis;
ein Kabel mit einer Vielzahl von Leiterdrähten, die mit dem Schwingkreis verbunden sind, und einem Abdeckteil, das aus einem Isolator gebildet ist und die Vielzahl von Leiterdrähten abdeckt; und
eine Steuereinrichtung, die Messinformation über eine elektrostatische Kapazität zwischen den Leiterdrähten basierend auf der Frequenzinformation des Schwingkreises ausgibt,
wobei die Vielzahl von Leiterdrähten mindestens einen ersten Modus, der aus einer ersten Leiterdrahtgruppe und einer zweiten Leiterdrahtgruppe besteht, und einen vom ersten Modus verschiedenen zweiten Modus aufweist, der aus einer dritten Leiterdrahtgruppe und einer vierten Leiterdrahtgruppe besteht,
wobei die erste Leiterdrahtgruppe und die zweite Leiterdrahtgruppe derart eingerichtet sind, dass sie keine umgebende Beziehung zueinander bilden,
wobei eine Phase eines Signals in der ersten Leiterdrahtgruppe und eine Phase eines Signals in der zweiten Leiterdrahtgruppe verschieden sind,
wobei die dritte Leiterdrahtgruppe derart eingerichtet ist, dass sie von der vierten Leiterdrahtgruppe umschlossen ist, wobei eine Phase eines Signals in der dritten Leiterdrahtgruppe und eine Phase eines Signals in der vierten Leiterdrahtgruppe verschieden sind, und
wobei die Steuereinrichtung dazu eingerichtet ist, zwischen dem ersten Modus und dem zweiten Modus umzuschalten.

2. Messvorrichtung nach Anspruch 1,
wobei die Vielzahl von Leiterdrähten ferner eine fünfte Leiterdrahtgruppe aufweist, und
wobei die fünfte Leiterdrahtgruppe eine Gruppe ist, die aus Neutralleitern besteht, die mit dem Erdungspotential der Steuereinrichtung verbunden sind, die vom Schwingkreis verschiedene Schaltkreise aufweist.

3. Messvorrichtung nach Anspruch 2,
wobei die erste Leiterdrahtgruppe und die zweite Leiterdrahtgruppe einander zugewandt sind, wobei die fünfte Leiterdrahtgruppe dazwischen angeordnet ist.

4. Messvorrichtung nach einem der Ansprüche 1 bis 3,
wobei die Steuereinrichtung Messinformation über eine elektrostatische Kapazität zwischen den Leiterdrähten basierend auf der Frequenzinformation des Schwingkreises im zweiten Modus ausgibt.

5. Messvorrichtung nach einem der Ansprüche 1 bis 4,
wobei die Steuereinrichtung eine Schaltschaltung aufweist, und
wobei der erste Modus und der zweite Modus durch die Schaltschaltung geschaltet werden.

6. Messvorrichtung nach einem der Ansprüche 1 bis 5, wobei das Kabel ein Cabtyre-Kabel ist.

7. Messvorrichtung nach einem der Ansprüche 1 bis 6,
wobei die Steuereinrichtung eine Kommunikationseinrichtung aufweist, und
wobei die Kommunikationseinrichtung Messinformation an eine externe Vorrichtung überträgt.

8. Messsystem, aufweisend:
eine Messvorrichtung nach Anspruch 1; und
eine Informationsverarbeitungseinrichtung,
wobei die Informationsverarbeitungseinrichtung Information bezüglich des Wasserpegels basierend auf der Messinformation im ersten Modus und der Messinformation im zweiten Modus ausgibt.

9. Verfahren zum Verarbeiten von Messinformation, die durch eine Messvorrichtung erhalten wird, durch eine Informationsverarbeitungseinrichtung,
wobei die Messvorrichtung aufweist:
einen Schwingkreis;
ein Kabel mit einer Vielzahl von Leiterdrähten, die mit dem Schwingkreis verbunden sind, und einem Abdeckteil, das aus einem Isolator gebildet ist und die Vielzahl von Leiterdrähten abdeckt; und
eine Steuereinrichtung, die Messinformation über eine elektrostatische Kapazität zwischen den Leiterdrähten basierend auf der Frequenzinformation des Schwingkreises ausgibt,
wobei die Vielzahl von Leiterdrähten mindestens einen ersten Modus, der aus einer ersten Leiterdrahtgruppe und einer zweiten Leiterdrahtgruppe besteht, und einen vom ersten Modus verschiedenen zweiten Modus aufweist, der aus einer dritten Leiterdrahtgruppe und einer vierten Leiterdrahtgruppe besteht,
wobei die erste Leiterdrahtgruppe und die zweite Leiterdrahtgruppe derart eingerichtet sind, dass sie keine umgebende Beziehung zueinander bilden,
wobei eine Phase eines Signals in der ersten Leiterdrahtgruppe und eine Phase eines Signals in der zweiten Leiterdrahtgruppe verschieden sind,
wobei die dritte Leiterdrahtgruppe derart eingerichtet ist, dass sie von der vierten Leiterdrahtgruppe umschlossen ist, wobei eine Phase eines Signals in der dritten Leiterdrahtgruppe und eine Phase eines Signals in der vierten Leiterdrahtgruppe verschieden sind, und
wobei die Steuereinrichtung dazu eingerichtet ist, zwischen dem ersten Modus und dem zweiten Modus umzuschalten, und
wobei die Informationsverarbeitungseinrichtung Information bezüglich des Wasserpegels basierend auf der Messinformation im ersten Modus und der Messinformation im zweiten Modus ausgibt.

## Revendications

1. Dispositif de mesure comprenant :
un circuit d'oscillation ;
un câble comprenant une pluralité de fils conducteurs connectés au circuit d'oscillation, et une partie de recouvrement formée d'un isolant et recouvrant la pluralité de fils conducteurs ; et
un dispositif de contrôle qui fournit des informations de mesure d'une capacité électrostatique entre les fils conducteurs sur la base des informations de fréquence du circuit d'oscillation,
dans lequel la pluralité de fils conducteurs présente au moins un premier mode composé d'un premier groupe de fils conducteurs et d'un deuxième groupe de fils conducteurs, et un deuxième mode, différent du premier mode, composé d'un troisième groupe de fils conducteurs et d'un quatrième groupe de fils conducteurs,
dans lequel le premier groupe de fils conducteurs et le deuxième groupe de fils conducteurs sont prévus de manière à ne pas former une relation d'entourage l'un avec l'autre, dans lequel une phase d'un signal dans le premier groupe de fils conducteurs et une phase d'un signal dans le deuxième groupe de fils conducteurs sont différentes,
dans lequel le troisième groupe de fils conducteurs est prévu de manière à être entouré par le quatrième groupe de fils conducteurs,
dans lequel une phase d'un signal dans le troisième groupe de fils conducteurs et une phase d'un signal dans le quatrième groupe de fils conducteurs sont différentes, et
dans lequel le dispositif de contrôle est prévu pour être commutable entre le premier mode et le deuxième mode.

2. Dispositif de mesure selon la revendication 1,
dans lequel la pluralité de fils conducteurs comprend en outre un cinquième groupe de fils conducteurs, et
dans lequel le cinquième groupe de fils conducteurs est un groupe composé de fils neutres connectés au potentiel de masse du dispositif de contrôle présentant des circuits autres que le circuit d'oscillation.

3. Dispositif de mesure selon la revendication 2,
dans lequel le premier groupe de fils conducteurs et le deuxième groupe de fils conducteurs sont placés l'un en face de l'autre, le cinquième groupe de fils conducteurs étant interposé entre eux.

4. Dispositif de mesure selon l'une quelconque des revendications 1 à 3,
dans lequel le dispositif de contrôle fournit des informations de mesure d'une capacité électrostatique entre les fils conducteurs sur la base des informations de fréquence du circuit d'oscillation dans le deuxième mode.

5. Dispositif de mesure selon l'une quelconque des revendications 1 à 4,
dans lequel le dispositif de contrôle comprend un circuit de commutation, et
dans lequel le premier mode et le deuxième mode sont commutés par le circuit de commutation.

6. Dispositif de mesure selon l'une quelconque des revendications 1 à 5,
dans lequel le câble est un câble Cabtyre.

7. Dispositif de mesure selon l'une quelconque des revendications 1 à 6,
dans lequel le dispositif de contrôle comprend un dispositif de communication, et
dans lequel le dispositif de communication transmet les informations de mesure à un dispositif externe.

8. Système de mesure comprenant :
un dispositif de mesure selon la revendication 1 ; et
un dispositif de traitement des informations,
dans lequel le dispositif de traitement des informations fournit des informations concernant le niveau de l'eau, sur la base des informations de mesure dans le premier mode et des informations de mesure dans le deuxième mode.

9. Procédé de traitement des informations de mesure, obtenues à l'aide d'un dispositif de mesure, par un dispositif de traitement des informations,
dans lequel le dispositif de mesure comprend :
un circuit d'oscillation ;
un câble comprenant une pluralité de fils conducteurs connectés au circuit d'oscillation, et une partie de recouvrement formée d'un isolant et recouvrant la pluralité de fils conducteurs ; et
un dispositif de contrôle qui fournit des informations de mesure d'une capacité électrostatique entre les fils conducteurs sur la base des informations de fréquence du circuit d'oscillation,
dans lequel la pluralité de fils conducteurs présente au moins un premier mode composé d'un premier groupe de fils conducteurs et d'un deuxième groupe de fils conducteurs, et un deuxième mode, différent du premier mode, composé d'un troisième groupe de fils conducteurs et d'un quatrième groupe de fils conducteurs,
dans lequel le premier groupe de fils conducteurs et le deuxième groupe de fils conducteurs sont prévus de manière à ne pas former une relation d'entourage l'un avec l'autre, dans lequel une phase d'un signal dans le premier groupe de fils conducteurs et une phase d'un signal dans le deuxième groupe de fils conducteurs sont différentes,
dans lequel le troisième groupe de fils conducteurs est prévu de manière à être entouré par le quatrième groupe de fils conducteurs,
dans lequel une phase d'un signal dans le troisième groupe de fils conducteurs et une phase d'un signal dans le quatrième groupe de fils conducteurs sont différentes,
dans lequel le dispositif de contrôle est prévu pour être commutable entre le premier mode et le deuxième mode, et
dans lequel le dispositif de traitement des informations fournit des informations concernant le niveau de l'eau, sur la base des informations de mesure dans le premier mode et des informations de mesure dans le deuxième mode.
